# EUROPEAN PATENT APPLICATION

(11) **EP 3 392 547 A1**
(43) Date of publication of application: **24.10.2018**
(21) Application number: 17167372.6
(22) Date of filing: 20.04.2017
(51) Int. Cl.: F21K 9/27, G02F 1/1335, G02B 6/00, F21K 9/61

(54) **LED TUBE FOR RETROFITTING IN A FLUORESCENT TUBE LIGHTING FIXTURE**

(71) Applicant: Vestel Elektronik Sanayi ve Ticaret A.S., 45030 Manisa (TR)
(72) Inventor: KARSLI, Kivanc, 45030 Manisa (TR)
(74) Representative: Ascherl, Andreas

(57) **Abstract**

The present invention provides an LED tube (200a) for retrofitting into a fluorescent tube lighting fixture. The LED tube (200a) comprises at least one light emitting diode (201) and a longitudinal light guide (203) with two opposite ends. The at least one light emitting diode (201) is located at at least one of the opposite ends of the longitudinal light guide (203) and is arranged to inject light thereto. The longitudinal light guide (203) has a refractive pattern (206) formed on a longitudinal surface thereof, which pattern (206) is arranged to out-couple light from within the light guide (203). During operation, light emitted by the light emitting diode (201) travels within the light guide (203) by total internal reflection, before being out-coupled from the light guide by the refractive pattern (206). Since the light emitting diode is not directly visible through the light guide, there is no risk that during operation, the light emitting diode will be a source of glare, or be able to cast sharp shadows. This allows the plurality of light emitting diodes within a conventional retrofittable LED tube to be replaced with a smaller number of individually brighter light emitting diodes, which can together provide the same illuminance as such a conventional retrofittable LED tube, but at a reduced cost of production and with increased reliability, due to the presence of fewer components. Moreover, the refractive pattern (206) on the light guide can be altered to suit different applications and to provide different patterns of illumination, as required. The invention also provides a luminaire comprising such a new type of retrofittable LED tube, as well as a backlight unit for a display, wherein the backlight unit comprises such a new type of retrofittable LED tube. In addition, the invention provides a method of manufacturing such a new type of retrofittable LED tube which comprises moulding the light guide from a polycarbonate, or acrylate polymer, such as poly(methyl methacrylate). Finally, the invention also provides a method of reducing electrical power consumption by retrofitting a pre-installed fluorescent tube lighting fixture with such a new type of retrofittable LED tube.

## Description

The present invention relates to an LED tube for retrofitting in a fluorescent tube lighting fixture according to claim 1, a backlight unit for a display according to claim 12, a luminaire according to claim 13, a method of manufacturing an LED tube according to claim 14, and a method of reducing electrical power consumption according to claim 15.

### Background of the Invention

Light emitting diodes (LEDs) are being increasingly used in lighting applications in place of incandescent light bulbs and fluorescent tubes, in order to provide levels of illumination which are the same as or higher than such earlier technologies, but with reduced electrical power consumption and increased lifetimes before they need replacing. However, there are still large numbers of pre-installed lighting fixtures or luminaires, which are designed to receive fluorescent tubes, but which would be expensive and/or inconvenient to replace entirely with new LED lighting fixtures. This has led to the development of LED tubes which are suitable for retrofitting in fluorescent tube lighting fixtures. Such LED tubes have substantially the same external dimensions and form factor as a traditional fluorescent tube of the same size, so that they can be retrofitted into a fluorescent tube lighting fixture, but contain LEDs for generating light, instead of a fluorescent gas. Traditional fluorescent tubes come in various different sizes, which are typically designated by the letter T, followed by a number representing the width of the tube measured in eighths of an inch, such as T5, T8, T9, and so on. LED tubes which can be substituted for these various different sizes of conventional fluorescent tubes in fluorescent tube lighting fixtures have all been developed. Some examples of such LED tubes for retrofitting in fluorescent tube lighting fixtures are described in US 2016/327216, US 2016/356472 and US 2016/341414.

However, in general, such existing retrofittable LED tubes have a common feature that the LEDs they contain are arranged in a row within a longitudinal diffuser which takes the place of the gas-filled tube in a conventional fluorescent tube. This arrangement of the LEDs has several disadvantages, as follows. Firstly, it means that the LEDs can be seen directly through the diffuser, which allows them to cast sharp shadows and to act as an undesirable source of glare. This can cause discomfort and eye fatigue. On the other hand, if the opacity of the surrounding diffuser is increased in order to reduce such glare, the power consumption of the LEDs must also be increased proportionally to maintain the same level of illuminance. Moreover, such a design of LED tube does not easily allow a single, more powerful LED to be substituted for a plurality of lower power LEDs, which would have advantages in reducing the number of components, and therefore the manufacturing cost of the tube, whilst also increasing its reliability.

### Object of the Invention

It is therefore an object of the invention to provide an LED tube for retrofitting in a fluorescent tube lighting fixture, a backlight unit for a display, a luminaire, a method of manufacturing an LED tube, and a method of reducing electrical power consumption.

### Description of the Invention

The object of the invention is solved by an LED tube for retrofitting in a fluorescent tube lighting fixture according to claim 1. The LED tube at least comprises a light emitting diode and a longitudinal light guide having a first end and a second end opposite to the first end. The light emitting diode is located at the first end of the longitudinal light guide and is arranged to inject light thereto. The longitudinal light guide has a refractive pattern on a longitudinal surface thereof which is arranged to out-couple light from within the light guide.

This solution is beneficial because the light emitted by the LED is contained within the light guide by total internal reflection until it is out-coupled from the light guide by the refractive pattern formed on the surface of the light guide. Thus the LED can no longer be seen directly through the light guide and is therefore unable to act as a source of glare or to cast sharp shadows. This provides greater eye comfort and less fatigue. Furthermore, the distribution of the light emitted by the LED tube can be made more uniform by an appropriate choice of the refractive pattern than the light distribution provided by a row of directly visible LEDs, and the refractive pattern can also be chosen according to the requirements of a particular application to cast light as desired. On the other hand, since the light guide contains the light emitted by the LED by total internal reflection, there is no need for the light guide to be opaque and substantially all the light emitted by the LED can be out-coupled by the refractive pattern, allowing for reduced power consumption in comparison to a row of LEDs partially obscured by a semi-opaque diffuser. Moreover, a plurality of lower power LEDs can be replaced by a single, more powerful LED, which has advantages in reducing the number of components, and therefore the manufacturing cost of the LED tube, whilst also increasing its reliability. The light guide can also be made in different shapes and designs according to requirements and application, and does not have to be tubular in design, provided that the LED tube has substantially the same external dimensions and form factor as a conventional fluorescent tube of the same size, so that it can be retrofitted into a fluorescent tube lighting fixture.

Advantageous embodiments of the invention may be configured according to any claim and/or part of the following description.

In one possible embodiment, the LED tube may further comprise a second light emitting diode located at the second, opposite end of the longitudinal light guide.

If so, the refractive pattern on the longitudinal surface of the light guide is preferably symmetrical between the first and second ends. This has the advantage of spreading the out-coupled light evenly along the length of the light guide.

In an alternative possible embodiment, the LED tube may further comprise a retroreflector located at the second, opposite end of the longitudinal light guide.

If so, the refractive pattern on the longitudinal surface of the light guide is preferably asymmetrical between the first and second ends. This also has the advantage of spreading the out-coupled light evenly along the length of the light guide.

In any event, the LED tube may further comprise a refractive optical element interposed between the light emitting diode and the respective end of the longitudinal light guide where the light emitting diode is located. Such a refractive optical element may comprise at least one of a collimating lens and an optical element for matching the respective refractive indices of the light emitting diode and the light guide, such as a graded index (GRIN) optical element.

In various possible embodiments, the longitudinal light guide may have an end face which is non-planar. This solution is beneficial for capturing as much of the light emitted by the light emitting diode during operation as possible and guiding it into the light guide.

In other possible embodiments, the LED tube may comprise a plurality of light emitting diodes located at the same end of the longitudinal light guide as each other. This gives greater flexibility in lighting design, for example, by allowing the use of light emitting diodes of different colours.

In further possible embodiments, the light guide may have a non-circular cross-section. This also gives greater flexibility in lighting design, according to application.

In other embodiments, the light emitting diode may be mounted on a heat sink within an end cap of the LED tube, for example if the light emitting diode is a high-powered light emitting diode.

If so, the end cap preferably contains a retroreflector arranged to direct light from the light emitting diode into the respective end of the longitudinal light guide where the light emitting diode is located. This helps to ensure that as much of the light from the light emitting diode is directed into the respective end of the longitudinal light guide as possible.

The present invention also relates to a backlight unit for a display, wherein the backlight unit at least comprises an LED tube as described herein. The display may, for example, be an active display, such as a liquid crystal display (LCD), or a passive display, such as a paper poster or advertisement.

The present invention also relates to a luminaire at least comprising an LED tube as described herein. The luminaire may, for example, be a conventional fluorescent tube lighting fixture in which an LED tube as described herein has been retrofitted, although it may instead be of a new design.

The present invention further relates to a method of manufacturing an LED tube as described herein, wherein the method at least comprises moulding the longitudinal light guide from a polycarbonate polymer, such as allyl diglycol carbonate (also known as CR-39) or an acrylate polymer, such as poly(methyl methacrylate). The refractive pattern on the longitudinal surface of the light guide may also be moulded as part of this process.

Finally, the present invention also relates to a method of reducing electrical power consumption by retrofitting a pre-installed fluorescent tube lighting fixture with an LED tube as described herein.

Further features, goals and advantages of the present invention will now be described in association with the accompanying drawings, in which exemplary components of the invention are illustrated. Components of the devices and methods according to the invention which are at least essentially equivalent to each other with respect to their function can be marked by the same reference numerals, wherein such components do not have to be marked or described in all of the drawings.

In the following description, the invention is described by way of example only with respect to the accompanying drawings.

### Brief Description of the Drawings

Fig. 1A is a schematic perspective view of a prior art LED tube for retrofitting in a fluorescent tube lighting fixture;
Fig. 1B is a schematic side view of the prior art LED tube shown in Fig. 1 A;
Fig. 2A is a schematic perspective view of a first embodiment of an LED tube for retrofitting in a fluorescent tube lighting fixture;
Fig. 2B is a schematic side view of the embodiment of an LED tube shown in Fig. 2A;
Fig. 2C is a schematic side view of a second embodiment of an LED tube for retrofitting in a fluorescent tube lighting fixture;
Fig. 3 is a schematic end view of an embodiment of an LCD display backlight unit;
Fig. 4A is a schematic end view of an embodiment of a luminaire;
Fig. 4B is a schematic perspective view of the embodiment of the luminaire shown in Fig. 4A;
Fig. 5A is a schematic side view of a third embodiment of an LED tube for retrofitting in a fluorescent tube lighting fixture;
Fig. 5B is a schematic exploded side view of the embodiment of an LED tube shown in Fig. 5A;
Fig. 5C is a schematic exploded side view of a fourth embodiment of an LED tube for retrofitting in a fluorescent tube lighting fixture;
Fig. 5D is a schematic exploded side view of a fifth embodiment of an LED tube for retrofitting in a fluorescent tube lighting fixture;
Fig. 5E is a schematic exploded side view of a sixth embodiment of an LED tube for retrofitting in a fluorescent tube lighting fixture;
Fig. 5F is a schematic exploded side view of a seventh embodiment of an LED tube for retrofitting in a fluorescent tube lighting fixture;
Fig. 5G is a schematic exploded side view of an eighth embodiment of an LED tube for retrofitting in a fluorescent tube lighting fixture;
Fig. 6A is a schematic transverse cross-section through the embodiment of an LED tube shown in Figs. 5A, 5B and 6A;
Fig. 6B is a schematic transverse cross-section through the embodiment of an LED tube shown in Fig. 5F;
Fig. 6C is a schematic transverse cross-section through a ninth embodiment of an LED tube for retrofitting in a fluorescent tube lighting fixture;
Fig. 6D is a schematic transverse cross-section through a tenth embodiment of an LED tube for retrofitting in a fluorescent tube lighting fixture; and
Fig. 6E is a schematic transverse cross-section through an eleventh embodiment of an LED tube for retrofitting in a fluorescent tube lighting fixture.

### Detailed Description of the Drawings

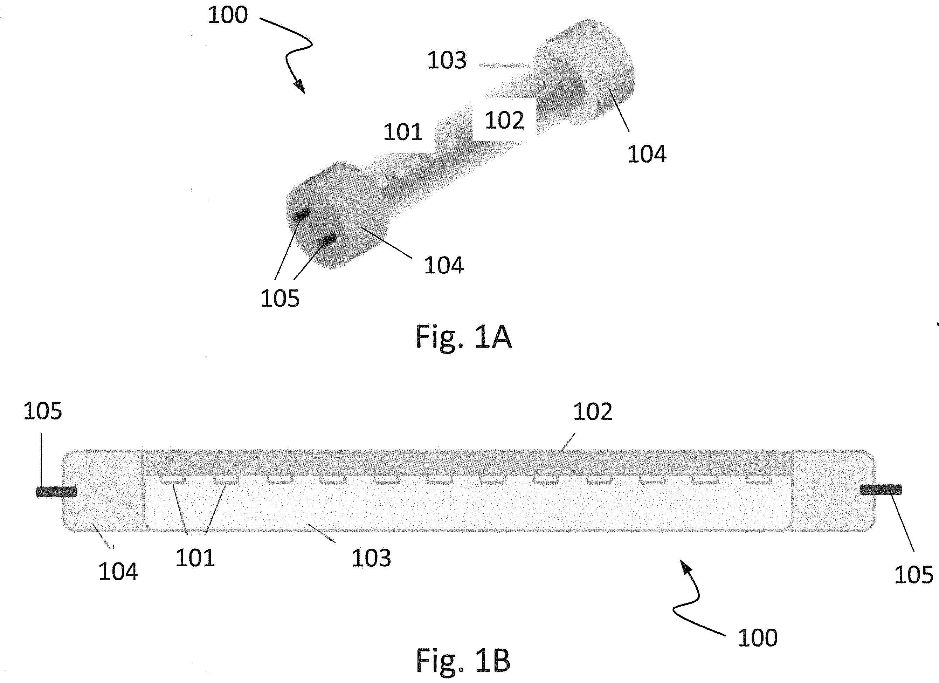

Figs. 1A and 1B schematically show a prior art LED tube 100 for retrofitting in a fluorescent tube lighting fixture. The LED tube 100 comprises a plurality of light emitting diodes 101 mounted in a row on a printed circuit board 102 within a longitudinal diffuser 103. The diffuser 103 has two end caps 104, each of which is provided with electrodes 105 for making electrical contact with an external electrical power supply. The LED tube 100 has substantially the same external dimensions and form factor as a conventional fluorescent tube of the same size, so that it can be retrofitted into a fluorescent tube lighting fixture. However, since the light emitting diodes 101 are directly visible through the diffuser 103, they can be an undesirable source of glare. On the other hand, if the opacity of the diffuser 103 is increased to decrease the glare from the light emitting diodes 101, then the power of the light emitting diodes 101 must also be undesirably increased proportionally, in order to maintain their illuminance.

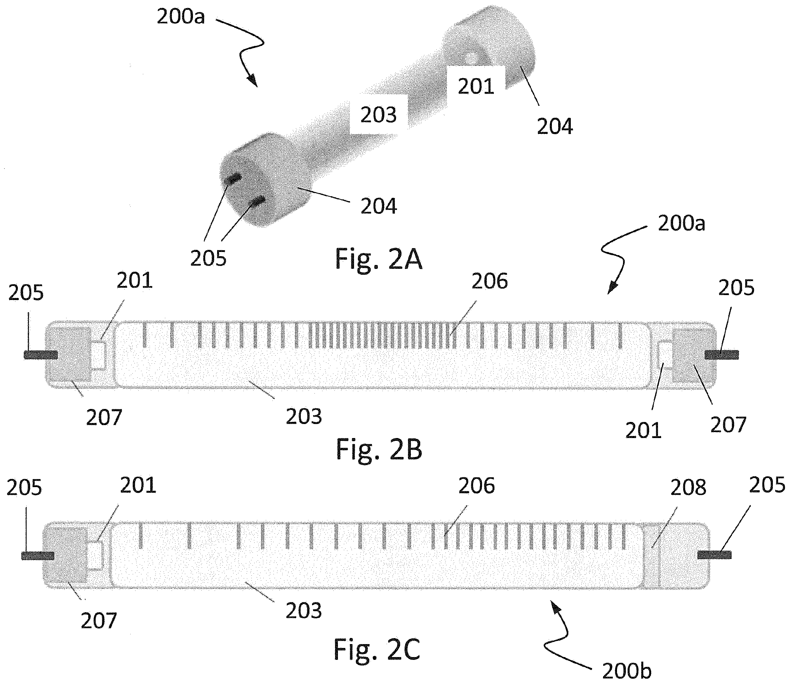

Figs. 2A and 2B schematically show a first embodiment of an LED tube 200a for retrofitting in a fluorescent tube lighting fixture. The LED tube 200a comprises two light emitting diodes 201 and a longitudinal light guide 203. Each one of the light emitting diodes 201 is respectively located at a respective end of the longitudinal light guide 203 and is arranged to inject light thereto. The longitudinal light guide 203 has a refractive pattern 206 formed on a longitudinal surface thereof, which is arranged to out-couple light from within the light guide 203. The longitudinal light guide 203 has two end caps 204 at each opposite end thereof, and each of the end caps 204 is provided with electrodes 205 for making electrical contact with an external electrical power supply. The LED tube 200a has substantially the same external dimensions and form factor as a conventional fluorescent tube of the same size, so that it can be retrofitted into a fluorescent tube lighting fixture.

During operation, neither of the light emitting diodes 201 is directly visible through the longitudinal light guide 203, so cannot be a source of glare. Instead, light emitted by the light emitting diodes 201 travels along the light guide 203 by total internal reflection until it is out-coupled from the light guide 203 by the refractive pattern 206. The refractive pattern 206 can be so designed that the light from the light emitting diodes 201 is directed as desired, according to any particular application. In comparison to the prior art LED tube 100 shown in Figs. 1A and 1B, the same illuminance as provided by the plurality of light emitting diodes 101 can instead be provided by only two high-powered light emitting diodes 201, since there is no risk of glare. Each of the high-powered light emitting diodes 201 is mounted on a respective heat sink 207 within an end cap 204. Since in this embodiment, the two light emitting diodes 201 have the same brightness during operation as each other, the refractive pattern 206 is symmetrical between the opposite ends of the light guide 203, so that the out-coupled light is also evenly spread along the length of the light guide 203.

Fig. 2B schematically shows a second embodiment of an LED tube 200b for retrofitting in a fluorescent tube lighting fixture. The LED tube 200b differs from the LED tube 200a shown in Figs. 2A and 2B in that instead of having two light emitting diodes 201 each of which is respectively located at a respective end of the longitudinal light guide 203, the LED tube 200b comprises only a single light emitting diode 201 which is located at just one end of the longitudinal light guide 203 and a retroreflector 208 located at the opposite end of the longitudinal light guide 203 from the single light emitting diode 201. In this embodiment, the refractive pattern 206 is asymmetrical between the opposite ends of the light guide 203, so that the out-coupled light is again evenly spread along the length of the light guide 203.

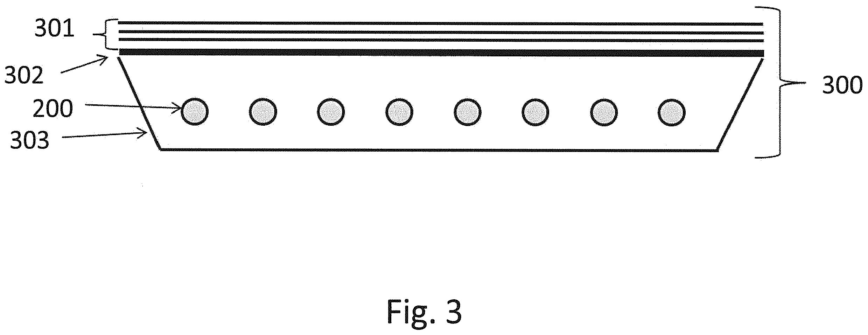

Fig. 3 schematically shows an embodiment of a backlight unit 300 for an LCD display. The backlight unit 300 comprises an optical film stack 301, a diffuser plate 302, a reflector 303 and a plurality of LED tubes 200, each of which may be seen end-on in Fig. 3 and each of which has substantially the same external dimensions and form factor as a conventional fluorescent tube of the same size. The LED tubes 200 may, for example, be LED tubes of the types shown in Figs. 2A to 2C. Apart from the replacement of the LED tubes therein by embodiments of LED tubes 200 according to the invention, the backlight unit 300 is structured and functions similarly to a conventional backlight unit for an LCD display. Moreover, whereas Fig. 3 shows an embodiment of a backlight unit 300 for an LCD display, which is therefore an active display, a similar backlight unit 300 comprising such LED tubes 200 could equally well be used to illuminate a passive display, such as a paper advertisement or a poster.

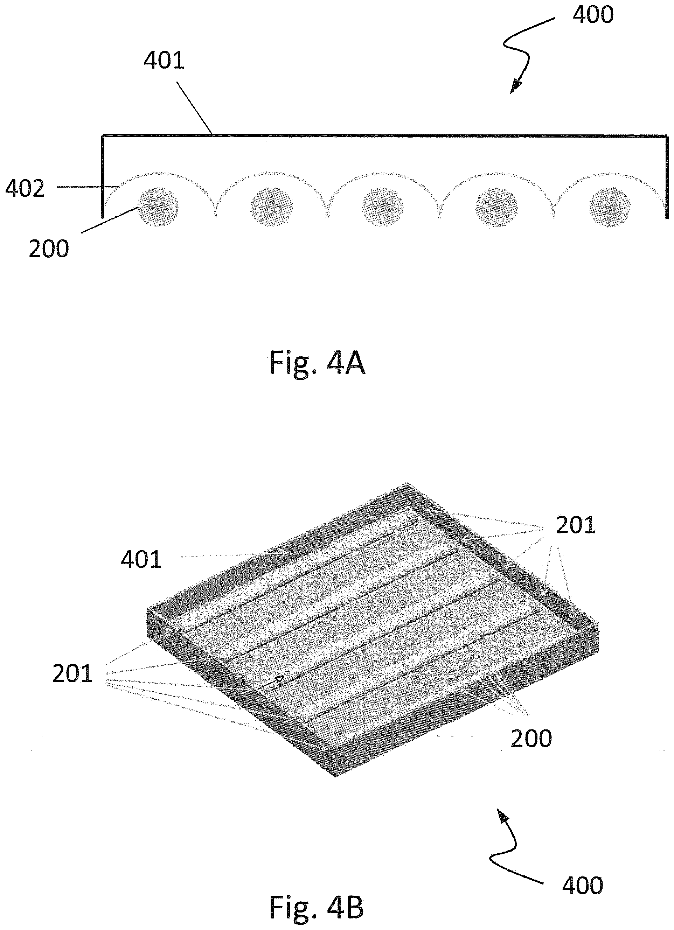

Figs. 4A and 4B schematically show an embodiment of a luminaire 400, which is a fluorescent tube lighting fixture into which LED tubes 200 according to the invention have been retrofitted. The luminaire 400 comprises a frame 401, a reflector 402 and a plurality of LED tubes 200, each of which may be seen end-on in Fig. 4A and each of which has substantially the same external dimensions and form factor as a conventional fluorescent tube of the same size. As may be seen in Fig. 4B, the LED tubes 200 are LED tubes of the types shown in Figs. 2A to 2B, in that they each comprise two light emitting diodes 201 located at opposite ends of a longitudinal light guide 203. Apart from the replacement of the LED tubes in the fluorescent tube lighting fixture by embodiments of LED tubes 200 according to the invention, the luminaire 400 is structured and functions similarly to a conventional luminaire 400, but provides less glare and reduced consumption of electrical power in comparison thereto.

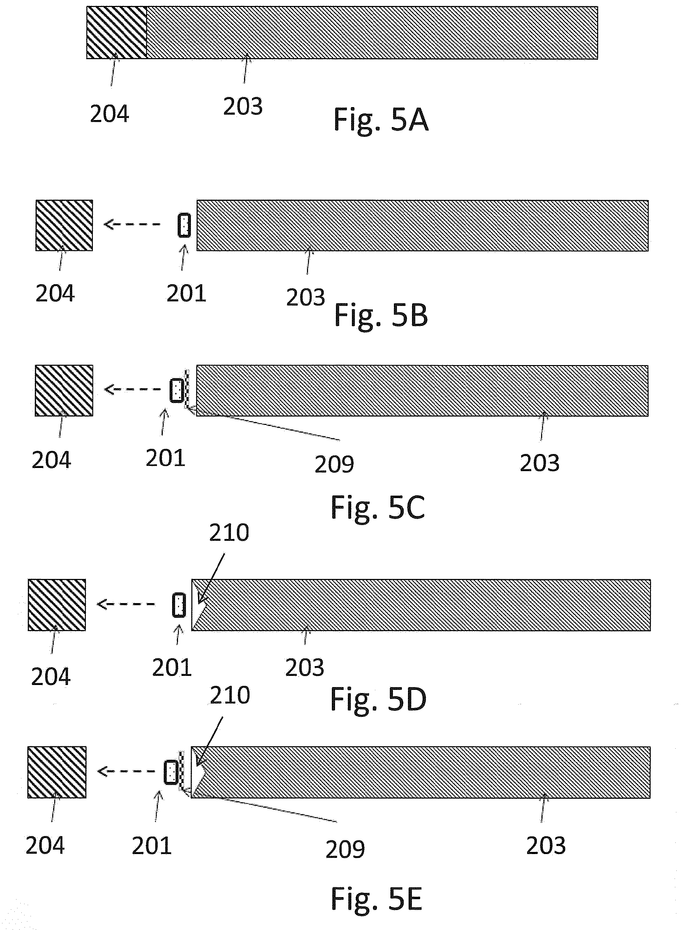

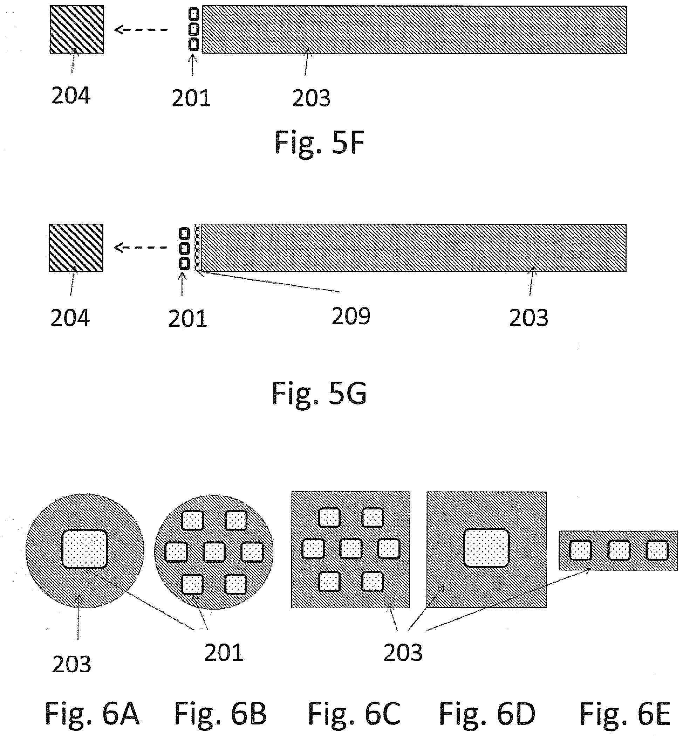

Figs. 5A, 5B and 6A schematically show a third embodiment of an LED tube for retrofitting in a fluorescent tube lighting fixture. This third embodiment of an LED tube is similar to the embodiment of Fig. 2C described above, except that the third embodiment comprises only a single end cap 204, and the end cap 204 contains a retroreflector 208 arranged to direct light from the light emitting diode 201 contained therein into the respective end of the longitudinal light guide 203 where the light emitting diode 201 is located. This third embodiment has substantially the same external dimensions and form factor as a conventional fluorescent tube of the same size, so that it too can be retrofitted into a fluorescent tube lighting fixture.

Fig. 5C schematically shows a fourth embodiment of an LED tube for retrofitting in a fluorescent tube lighting fixture. This fourth embodiment of an LED tube is similar to the embodiment of Figs. 5A, 5B and 6A described above, except that the fourth embodiment further comprises a refractive optical element 209 interposed between the light emitting diode 201 and the respective end of the longitudinal light guide 203 where the light emitting diode 201 is located. The refractive optical element 209 may, for example, be at least one of a collimating lens for collimating light emitted by the light emitting diode 201 into the light guide 203 or an optical element for matching the respective refractive indices of the light emitting diode 201 and the light guide 203 to each other.

Fig. 5D schematically shows a fifth embodiment of an LED tube for retrofitting in a fluorescent tube lighting fixture. This fifth embodiment of an LED tube is similar to the embodiment of Figs. 5A, 5B and 6A described above, except that the longitudinal light guide 203 has an end face 210 which is non-planar. This non-planar end face 210 is shaped so as to direct as much of the light from the light emitting diode 201 into the light guide 203 as possible.

Fig. 5E schematically shows a sixth embodiment of an LED tube for retrofitting in a fluorescent tube lighting fixture. This sixth embodiment of an LED tube is similar to the embodiment of Figs. 5A, 5B and 6A described above, except that it further comprises the additional features of both of the embodiments shown in Figs. 5C and 5D; in other words, it further comprises a refractive optical element 209 interposed between the light emitting diode 201 and the respective end of the longitudinal light guide 203 where the light emitting diode 201 is located and the longitudinal light guide 203 has an end face 210 which is non-planar.

Figs. 5F and 6B schematically show a seventh embodiment of an LED tube for retrofitting in a fluorescent tube lighting fixture. This seventh embodiment of an LED tube is similar to the embodiment of Figs. 5A, 5B and 6A described above, except that instead of comprising only a single light emitting diode 201, it comprises a plurality of light emitting diodes 201 located at the same end of the longitudinal light guide 203 as each other.

Fig. 5G schematically shows an eighth embodiment of an LED tube for retrofitting in a fluorescent tube lighting fixture. This eighth embodiment of an LED tube is similar to the embodiment shown in Figs. 5F and 6B, except that it further comprises a refractive optical element 209 interposed between the plurality of light emitting diodes 201 and the respective end of the longitudinal light guide 203 where the plurality of light emitting diodes 201 are located. As in the embodiment shown in Fig. 5C, the refractive optical element 209 may, for example, be at least one of a collimating lens for collimating light emitted by the light emitting diodes 201 into the light guide 203 or an optical element for matching the respective refractive indices of the light emitting diodes 201 with that of the light guide 203.

Figs. 6C, 6D and 6E respectively schematically show ninth, tenth and eleventh embodiments of an LED tube for retrofitting in a fluorescent tube lighting fixture. In all three of these different embodiments and as can be seen from Figs. 6C, 6D and 6E, the light guide 203 has a non-circular cross-section. Since the light guide 203 may be moulded from a polycarbonate or acrylate polymer, the light guide 203 may be moulded to have any shape to suit the requirements of a particular application, provided that the LED tube has substantially the same external dimensions and form factor as a conventional fluorescent tube of the same size, so that it can be retrofitted into a fluorescent tube lighting fixture. Indeed, the refractive pattern 206 on the light guide 203 may also be moulded into the longitudinal surface thereof as part of the production process.

Thus, the present invention provides an LED tube for retrofitting into a fluorescent tube lighting fixture. The LED tube comprises at least one light emitting diode and a longitudinal light guide with two opposite ends. The at least one light emitting diode is located at at least one of the opposite ends of the longitudinal light guide and is arranged to inject light thereto. The longitudinal light guide has a refractive pattern formed on a longitudinal surface thereof, which pattern is arranged to out-couple light from within the light guide. During operation, light emitted by the light emitting diode travels within the light guide by total internal reflection, before being out-coupled from the light guide by the refractive pattern. Since the light emitting diode is not directly visible through the light guide, there is no risk that during operation, the light emitting diode will be a source of glare, or be able to cast sharp shadows. This allows the plurality of light emitting diodes within a conventional retrofittable LED tube to be replaced with a smaller number of individually brighter light emitting diodes, which can together provide the same illuminance as such a conventional retrofittable LED tube, but at a reduced cost of production and with increased reliability, due to the presence of fewer components. Moreover, the refractive pattern on the light guide can be altered to suit different applications and to provide different patterns of illumination, as required. The invention also provides a luminaire comprising such a new type of retrofittable LED tube, as well as a backlight unit for a display, wherein the backlight unit comprises such a new type of retrofittable LED tube. In addition, the invention provides a method of manufacturing such a new type of retrofittable LED tube which comprises moulding the light guide from a polycarbonate, or acrylate polymer, such as poly(methyl methacrylate). Finally, the invention also provides a method of reducing electrical power consumption by retrofitting a pre-installed fluorescent tube lighting fixture with such a new type of retrofittable LED tube.

**Reference Numerals:**

| | | | |
|---|---|---|---|
| 100 | Retrofittable LED tube | 206 | Refractive pattern on light guide |
| 101 | Light emitting diode | 207 | Heat sink |
| 102 | Printed circuit board | 208 | Retroreflector |
| 103 | Diffuser | 209 | Refractive optical element |
| 104 | End cap | 210 | End face of light guide |
| 105 | Electrode | 300 | LCD display backlight unit |
| 200, 200a, 200b | | 301 | Optical film stack |
| | Retrofittable LED tubes | 302 | Diffuser plate |
| 201 | Light emitting diode | 303 | Reflector |
| 203 | Light guide | 400 | Luminaire |
| 204 | End cap | 401 | Frame |
| 205 | Electrode | 402 | Reflector |

## Claims

1. An LED tube (200, 200a, 200b) for retrofitting in a fluorescent tube lighting fixture, the LED tube at least comprising:
a light emitting diode (201); and
a longitudinal light guide (203) having a first end and a second end opposite to the first end;
wherein the light emitting diode (201) is located at the first end of the longitudinal light guide (203) and is arranged to inject light thereto; and
the longitudinal light guide (203) has a refractive pattern (206) on a longitudinal surface thereof arranged to out-couple light from within the light guide (203).

2. An LED tube (200a) according to claim 1, further comprising a second light emitting diode (201) located at the second end of the longitudinal light guide (203).

3. An LED tube (200a) according to claim 2, wherein the refractive pattern (206) on the longitudinal surface of the light guide (203) is symmetrical between the first and second ends.

4. An LED tube (200b) according to claim 1, further comprising a retroreflector (208) located at the second end of the longitudinal light guide (203).

5. An LED tube (200b) according to claim 4, wherein the refractive pattern (206) on the longitudinal surface of the light guide (203) is asymmetrical between the first and second ends.

6. An LED tube (200, 200a, 200b) according to any one of the preceding claims, further comprising a refractive optical element (209) interposed between the light emitting diode (201) and the respective end of the longitudinal light guide (203) where the light emitting diode (201) is located.

7. An LED tube (200, 200a, 200b) according to any one of the preceding claims, wherein the longitudinal light guide (203) has an end face (210) which is non-planar.

8. An LED tube (200, 200a, 200b) according to any one of the preceding claims, comprising a plurality of light emitting diodes (201) located at the same end of the longitudinal light guide (203) as each other.

9. An LED tube (200, 200a, 200b) according to any one of the preceding claims, wherein the light guide (203) has a non-circular cross-section.

10. An LED tube (200, 200a, 200b) according to any one of the preceding claims, wherein light emitting diode (201) is mounted on a heat sink (207) within an end cap (204).

11. An LED tube (200, 200a, 200b) according to claim 10, wherein the end cap (204) contains a retroreflector (208) arranged to direct light from the light emitting diode (201) into the respective end of the longitudinal light guide (203) where the light emitting diode (201) is located.

12. A backlight unit (300) for a display, the backlight unit at least comprising an LED tube (200, 200a, 200b) according to any one of claims 1 to 11.

13. A luminaire (400) at least comprising an LED tube (200, 200a, 200b) according to any one of claims 1 to 11.

14. A method of manufacturing an LED tube (200, 200a, 200b) according to any one of claims 1 to 11, wherein the method at least comprises moulding the longitudinal light guide (203) from a polycarbonate or acrylate polymer.

15. A method of reducing electrical power consumption, the method at least comprising retrofitting a pre-installed fluorescent tube lighting fixture with an LED tube (200, 200a, 200b) according to any one of claims 1 to 11.
